# EUROPEAN PATENT SPECIFICATION

(11) **EP 1 749 714 B1**
(45) Date of publication and mention of the grant of the patent: **18.09.2013**
(21) Application number: 06014443.3
(22) Date of filing: 12.07.2006
(51) Int. Cl.: B60R 22/34

(54) **Seatbelt retractor and seatbelt system having the same**
Sicherheitsgurt-Aufroller und Sicherheitsgurtvorrichtung mit einem derartigen Sicherheitsgurt-Aufroller
Enrouleur de ceinture de sécurité et système de ceinture de sécurité avec un tel enrouleur

(30) Priority: 04.08.2005 JP 2005226389
(43) Date of publication of application: 07.02.2007
(73) Proprietor: TAKATA CORPORATION, Minato-ku, Tokyo 106-8510 (JP)
(72) Inventor: Nomura, Yasuaki, Tokyo 106-8510 (JP)
(74) Representative: Banzer, Hans-Jörg

(56) References cited:
- EP-A2- 0 963 889
- DE-A1- 10 052 112
- DE-U1- 29 703 665

## Description

The present invention relates to a seatbelt retractor and a seatbelt system having the same installed in vehicles, such as cars, in which the retractor retracts and withdraws seatbelts with spools and is used for restraining occupants with seatbelts to protect them.

Seatbelt systems installed in vehicles such as cars restrain occupants with seatbelts in an emergency in which high deceleration is applied to vehicles, such as a vehicle crash, to prevent the inertial movement of the occupants from seats, thereby protecting the occupants. The seatbelt systems have a seatbelt retractor that retracts and withdraws a seatbelt with a spool and prevents the withdrawal of the seatbelt in an emergency.

For such seatbelt retractors, a seatbelt retractor is disclosed which retracts and withdraws a seatbelt with a motor, e.g., refer to PCT Japanese Patent Publication No. 2003-507252. The seatbelt retractor disclosed in PCT Japanese Patent Publication No. 2003-507252 is such that an electric motor is disposed in series coaxially with a belt reel (hereinafter, also referred to as a spool) on one axial side of the belt reel, in which the rotation of the electric motor is transmitted to the belt reel while being reduced in speed by a reduction mechanism having a planetary reduction gear mechanism. As the belt reel is rotated by the rotation of the electric motor in a belt retracting direction or a belt withdrawing direction, the seatbelt is retracted by or withdrawn from the belt reel.

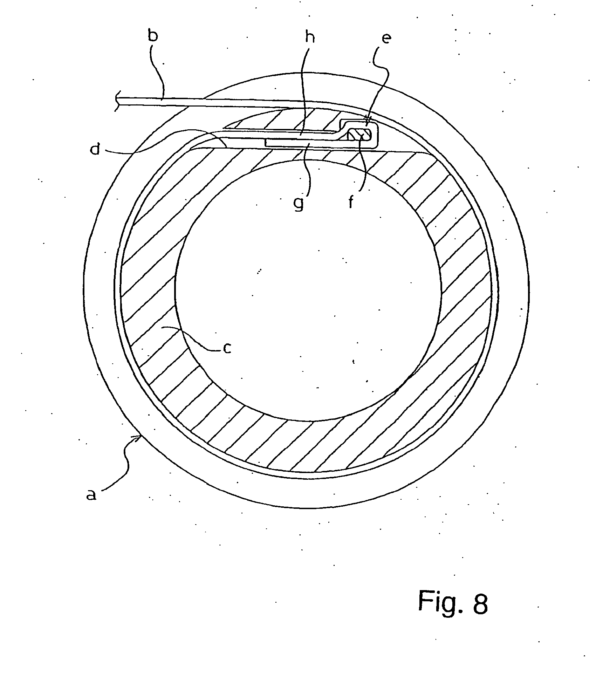

In general seatbelt retractors including the seatbelt retractor disclosed in PCT Japanese Patent Publication No. 2003-507252, a seatbelt b passes through a through hole d, which passes through the body c of a spool a (a portion to retract the seatbelt b), and the base end e of the seatbelt b is in engagement with the body of the spool a, as shown in Fig. 8. In this case, the base end e of the seatbelt b in engagement with the spool a is formed in such a manner that an end g of the seatbelt b is folded so as to surround a shaft member f having a specified thickness, such as a pin, to be tightly piled up on an opposing portion h of the seatbelt b, which is then stitched up. Accordingly, the base end e of the seatbelt b becomes massive to increase in thickness.

However, in order to bring this massive and thick base end e into engagement with the body c, the portion of the through hole d for accommodating the base end e (the length of the through hole d in the radial direction of the body c) must be set high to some extent. Also, since the portion where the end g of the seatbelt b is closely piled on the opposing portion h of the seatbelt b must be accommodated in the through hole d, this portion of the through hole d also must be high to some extent.

Therefore, the outside diameter of the spool a must be large. However, the large outside diameter of the spool a causes the size of the spool a to be large, thus posing the problem of increasing the seatbelt retractor. Particularly, for seatbelt retractors driven by a motor, the motor may be accommodated in the spool a having a cylindrical shape to reduce the size of the seatbelt retractor. In this case, however, the increasing of the outside diameter of the spool a poses a significant problem in reducing the size of the seatbelt retractor.

Furthermore, the seatbelt b must be inserted into the long through hole d to bring the seatbelt b into engagement with the spool a, thus resulting in low workability.

DE 297 03 665 U1 which serves as basis for the preamble of claim 1, relates to a winding device for a seatbelt. The winding device has a winding body which has cutouts for passing the seatbelt therethrough. A force-limiting member is centrally positioned in the interior of the winding body and has a cylindrical shape. To attach the seatbelt to the winding body, the seatbelt is threaded over various wall segments of the winding body.

EP 0 963 889 A2 relates to a seatbelt retractor in which a motor is disposed in an interior of a spool.

DE 100 52 112 A1 relates to an occupant restraint system which comprises a seatbelt retractor having a winding body. The winding body consists of several metal sleeves. To attach the seatbelt to the winding body, the seatbelt is provided with a loop through which the inner sleeve is inserted.

The present invention is made in consideration of the above-described problems. Accordingly, it is an object of the invention to provide a seatbelt retractor in which the thickness of the base end of a seatbelt retained by a spool is minimized so as to reduce the outside diameter of the spool so that the size can be reduced and high workability is provided.

It is another object of the invention to provide a seatbelt system in which the seatbelt retractor is made compact so that high flexibility of layout in vehicles is provided.

According to the present invention, this object is achieved by a seatbelt retractor according to Claim 1. The dependent claims define preferred or advantageous embodiments.

The folded portion at the base end of the seatbelt may be disposed on the side of the cylindrical member.

A motor for rotating the spool may be housed in the cylindrical member.

A seatbelt system of the invention includes at least a seatbelt for restraining an occupant; a seatbelt retractor for withdrawably retracting the seatbelt; a tongue slidably supported by the seatbelt; and a disengageable buckle to be engaged with the tongue, the seatbelt retractor being the seatbelt retractor according to any one aspect or embodiment of the invention.

With the seatbelt retractor of the invention, the spool is configured of two members: a spool body having an arc-shaped body; and a cylindrical member placed in the spool body and having a space substantially the same as the thickness of the seatbelt between the outer circumferential surface of the cylindrical member and the inner circumferential surface of the body. The seat belt is sandwiched between the inner circumferential surface of the body and the outer circumferential surface of the cylindrical member; and the base end of the seatbelt is in engagement with the rim of the body in such a manner that the end of the seatbelt is folded back and the folded portion is in close contact with the opposing portion of the seatbelt. This arrangement enables the base end of the seatbelt to be in tight engagement with the spool.

Since the base end of the seatbelt, which is retained by the spool, is formed in such a manner that one end of the seatbelt is simply folded back and the folded portion is in close contact with the opposing portion of the seatbelt, the base end can be as thin as about twice the thickness of the seatbelt. Accordingly, the diameter of the body of the spool, or the diameter of the belt retracting portion, can be small. Thus, as the outside diameter of the spool is reduced, the entire seatbelt retractor can correspondingly be made compact.

Furthermore, the seatbelt can be retained in the spool only by insertion of the cylindrical member into the spool body with the seatbelt in contact with the spool body. This arrangement facilitates mounting the seatbelt to the spool, thus providing high workability.

If the folded portion at the base end of the seatbelt is disposed on the side of the cylindrical member, even when the base end of the seatbelt comes into engagement with the rim of the body, the folded portion does not come off the opposing portion of the seatbelt, thus ensuring the base end of the seatbelt to be retained in the spool for a long period.

If a motor for rotating the spool is housed in the cylindrical member, this housing of the motor in the spool allows the seatbelt retractor to be made compact more effectively.

With the seatbelt system having the seatbelt retractor of the invention, the seatbelt retractor can be made compact, so that a high flexibility of layout in vehicles is provided.

In the following, a best mode for carrying out the present invention will be described with reference to the drawings.
Fig. 1 is a schematic diagram of a seatbelt system having a seatbelt retractor according to an embodiment of the invention.
Fig. 2 is a schematic fragmentary sectional view of a seatbelt retractor for use in the seatbelt system shown in Fig. 1.
Fig. 3 is a cross-sectional view taken along line III-III of Fig. 2.
Fig. 4 shows a spool body, wherein Fig. 4(a) is a front view and Fig. 4(b) is a cross-sectional view taken along line IVB-IVB of Fig. 4(a).
Fig. 5 shows the cylindrical member of Fig. 2, wherein Fig. 5(a) is a front view and Fig. 5(b) is a left side view.
Fig. 6 is a cross-sectional view taken along line VI-VI of Fig. 2.
Fig. 7 is a diagram illustrating a comparison between the sizes of the spool of the invention and a known spool.
Fig. 8 is a cross-sectional view of the known spool.

The terms "left" and "right" in the following description denote left and right in the corresponding diagram used in the description.

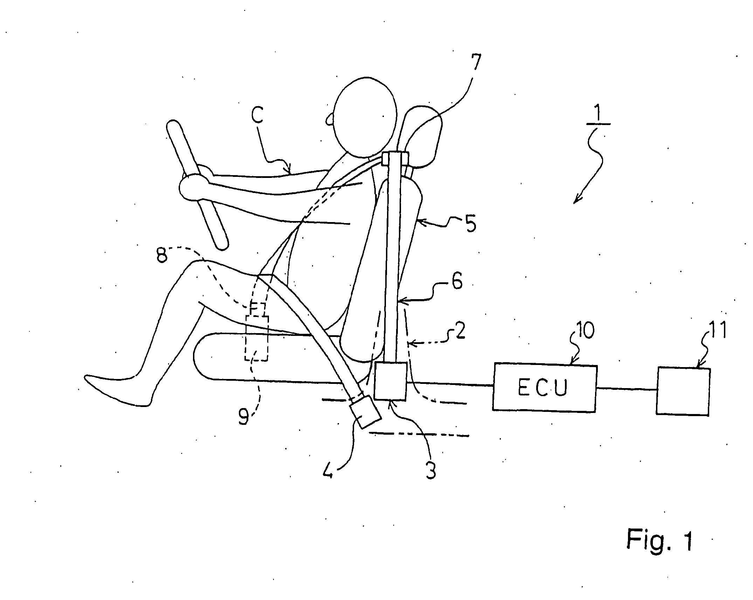

Referring to Fig. 1, the seatbelt system 1 includes a seatbelt retractor 3 fixed to a B-pillar 2 or the like of the vehicle body and driven by a motor; a seatbelt 6 withdrawn from the seatbelt retractor 3 and fixed to the floor of the vehicle body or a vehicle seat 5 with a belt anchor 4 at the end; a guide anchor 7 disposed to the vehicle body such as a center pillar, for guiding the seatbelt 6 withdrawn from the seatbelt retractor 3 toward a shoulder of an occupant C; a tongue 8 that is slidably supported by the seatbelt 6 guided from the guide anchor 7; a buckle 9 fixed to the floor of the vehicle body or the vehicle seat 5 and into which the tongue 8 is detachably inserted; an electronic control unit (ECU) for controlling the driving of the motor of the seatbelt retractor 3; and input unit 11, such as collision sensor or object detector, for sending various input signals to the ECU 10 to control the motor.

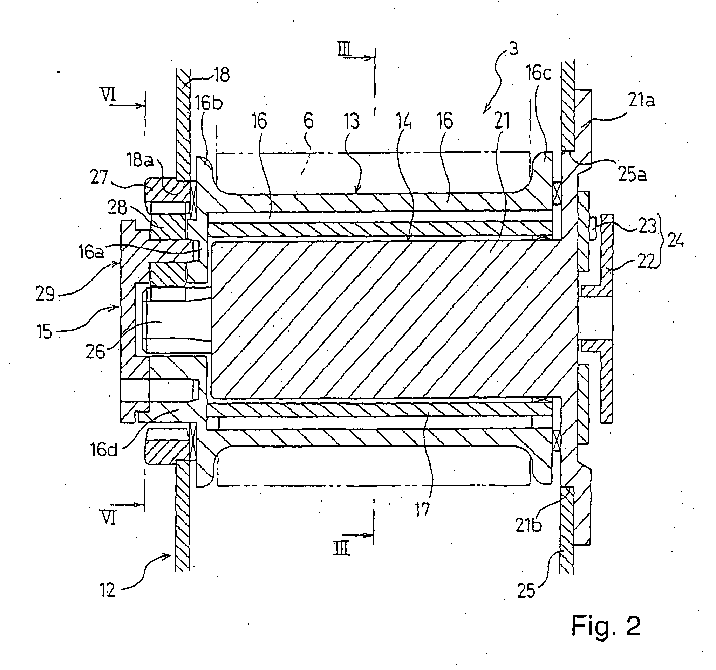

Fig. 2 is a schematic fragmentary sectional view of the seatbelt retractor of the embodiment.

As shown in Fig. 2, the seatbelt retractor 3 includes a base frame 12; a spool 13 for retracting the seatbelt 6; an electric motor 14 for rotating the spool 13; and a reduction mechanism 15 for reducing the torque of the electric motor 14 and transmitting it to the spool 13.

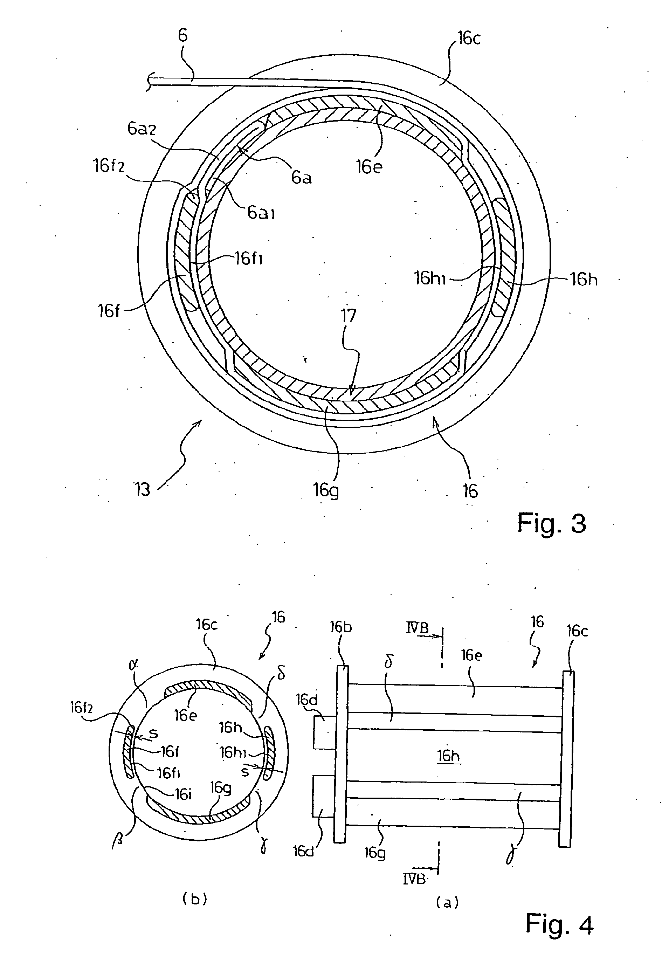

Referring to Figs. 2 and 3, the spool 13 comprises two members, a spool body 16 and a cylindrical member 17. The spool body 16 has a closed-end cylindrical shape in which right end is open and left end has a bottom 16a, and has flanges 16b and 16c at both ends. The bottom 16a has a cylindrical rotating shaft 16d projecting leftward therefrom. The rotating shaft 16d passes through an opening 18a of a first supporting member 18.

Referring then to Figs. 4(a) and 4(b), the spool body 16 of the spool 13 has first to fourth arc-shaped bodies 16e, 16f, 16g, and 16h that connect the left and right flanges 16b and 16c and for retracting the seatbelt 6. The first and third bodies 16e and 16g are opposed to each other in such a manner that the diameters of the inner circumferential surfaces are the same as the diameter of an inner circumferential hole 16i in the right flange 16c and coaxially with the inner circumferential hole 16i. The width (circumferential length) of the first body 16e is set shorter than the width (circumferential length) of the third body 16g.

The second and fourth bodies 16f and 16h are opposed to each other in such a manner that the diameters of the inner circumferential surfaces 16f₁ and 16h₁ are larger than the diameter of the inner circumferential hole 16i and coaxially with the inner circumferential hole 16i. Accordingly, the respective inner circumferential surfaces 16f₁ and 16h₁ of the second and fourth bodies 16f and 16h are located outside the inner circumferential hole 16i. In this case, the radial distance s between the inner circumferential surfaces 16f₁ and 16h₁ and the inner circumferential hole 16i is set approximately the same as the thickness of the seatbelt 6. The widths (circumferential lengths) of the second and fourth bodies 16f and 16h are set equal.

The first to fourth bodies 16e, 16f, 16g, and 16h are disposed cylindrically with predetermined circumferential intervals α, β, γ, and δ therebetween, respectively. In this case, the circumferential width of the interval α between the first and second bodies 16e and 16f is set at a maximum, and the other three intervals β, γ, and δ are set at a minimum.

The outside diameter of the cylindrical member 17 is set slightly smaller than the diameter of the inner circumferential hole 16i in the right flange 16c, so that it can be fitted in the inner circumferential hole 16i and the first to fourth bodies 16e, 16f, 16g, and 16h which are cylindrically arranged.

The base end 6a of the seatbelt 6 is formed in such a manner that one end of the seatbelt 6 is folded back once; the entire folded portion 6a₁ is in close contact with the opposing portion 6a₂ of the seatbelt 6; and the closely contact portion is tightly stitched up. Accordingly, the thickness of the base end 6a is set twice as large as that of the seatbelt 6. The length of the base end 6a along the length of the seatbelt 6 is set shorter than the circumferential width of the interval α by approximately the thickness of the seatbelt 6.

As shown in Fig. 3, the base end 6a of the seatbelt 6 is disposed in the interval α in such a manner that the folded portion 6a1 is located inside, and the seatbelt 6 extends from the base end 6a along the inner circumferential surface 16f₁ of the second body 16f, then passes through the interval β, extends along the outer circumferential surface of the third body 16g, passes through the interval γ, extends along the inner circumferential surface 16h₁ of the fourth body 16h, passes through the interval δ, and then extends along the external circumferential surface of the first body 16e. In this state, the cylindrical member 17 is inserted from the inner circumferential hole 16i of the flange 16c into the first to fourth bodies 16e, 16f, 16g, and 16h which are disposed cylindrically. With the cylindrical member 17 inserted, the base end 6a is disposed along the outer circumferential surface of the cylindrical member 17, while the seatbelt 6 is sandwiched between the inner circumferential surface 16f₁ of the second body 16f and the outer circumferential surface of the cylindrical member 17 and between the inner circumferential surface 16h₁ of the fourth body 16h and the outer circumferential surface of the cylindrical member 17. The cylindrical member 17 is locked in the spool body 16 in the axial direction with appropriate locking members or fixed to the spool body 16 with appropriate fixing members (not shown).

The interval between the inner circumferential surface 16f₁ of the second body 16f and the outer circumferential surface of the cylindrical member 17 and the interval between the inner circumferential surface 16h₁ of the fourth body 16h and the outer circumferential surface of the cylindrical member 17 are set at the distance s that is substantially the same as the thickness of the seatbelt 6. Accordingly, with the seatbelt 6 sandwiched between the spool body 16 and the cylindrical member 17, the base end 6a which is set twice as large as the thickness of the seatbelt 6 is pressed into engagement by the rim 16f₂ of the second body 16f when the seatbelt 6 is drawn. This arrangement prevents the base end 6a from entering the interval between the inner circumferential surface 16f₁ of the second body 16f and the outer circumferential surface of the cylindrical member 17 to pass therethrough. Thus, the base end 6a of the seatbelt 6 is tightly retained in the spool 13. In this case, the folded portion 6a₁ of the base end 6a is located inside or on the side of the cylindrical member 17, not on the side of the second body 16f. This arrangement prevents the folded portion 6a₁ from coming off the seatbelt 6 which is in close contact therewith, when the base end 6a is pushed against the rim 16f₂ of the second body 16f. One turn of the seatbelt 6 around the spool 13 is wound around the wound seatbelt 6, as with the known spools.

The electric motor 14 is configured as a known inner-rotor brushless motor. The electric motor 14 includes a cylindrical coil stator fixed in a motor housing 21 and a magnetic rotor passing through the stator in the axial direction and rotated by the stator. A magnetic disc 22 is provided on the right side of the rotor. The magnetic disc 22 is rotatable with the rotor, and is housed in the cylindrical member 17 of the spool 13.

A Hall sensor 23 is disposed in the motor housing 21. The magnetic disc 22 and the Hall sensor 23 configure a rotation amount sensor 24 for measuring the rotation amount of the electric motor 14. The rotation amount sensor 24 is one of the input units 11, which inputs a signal indicative of the rotation amount of the electric motor 14 measured by the rotation amount sensor 24 to the ECU 10.

A mounting flange 21a is formed on the right side of the motor housing 21. The electric motor 14 is inserted axially from the right side into the spool 13, whereby a ring-shaped step 21b of the mounting flange 21a is fitted in an opening 25a of a second support member 25, and the mounting flange 21a is fixed to the second support member 25 with a fixture (not shown).

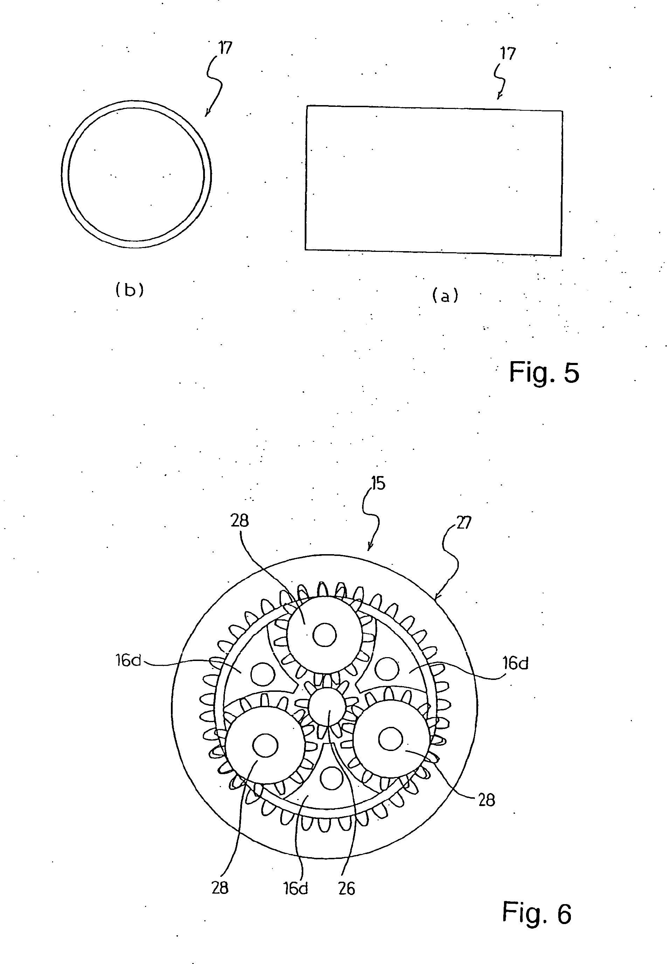

Referring to Figs. 2 and 6, the reduction mechanism 15 is configured as a planetary gear reduction mechanism. The planetary gear reduction mechanism includes a sun gear 26 disposed on the left side of the rotor of the electric motor 14 and rotatable with the rotor; an internal gear 27 fixed in the opening 18a of the first supporting member 18; a predetermined number of planetary gears 28 (three in the example of Fig. 6) in engagement with both of the sun gear 26 and the internal gear 27; and a carrier 29 that supports the planetary gears 28 rotatably. The carrier 29 is fixed to the spool 13 so as to rotate with the spool 13. The left end of the spool 13 is radially supported by the sun gear 26 via the carrier 29 and the planetary gears 28. The left end of the spool 13 is rotatably supported by the internal gear 27 via thrust bearing (without reference numeral) in the axial direction (in the thrusting direction), while the right end is rotatably supported by the motor housing 21 with a thrust bearing and a radial bearing (without reference numerals) in the radial direction and the axial direction.

In the seatbelt retractor 3, the rotation of the rotor of the electric motor 14 is transmitted to the planetary gears 28 via the sun gear 26 to rotate the planetary gears 28 on their axes. Then the planetary gears 28 revolve around the sun gear 26 by the rotation, so that the spool 13 rotates via the carrier 29 while reducing speed. In this case, the ECU 10 controls the rotation of the electric motor 14 in response to the rotation amount signal from the rotation amount sensor 24.

Thus, the spool 13 and the electric motor 14 of the seatbelt retractor 3 of the embodiment are directly connected via the reduction mechanism 15, so that the spool 13 rotates with the rotation of the electric motor 14. In this case, when the electric motor 14 is controlled so as to rotate in a forward or reverse direction, the spool 13 rotates in the belt retracting direction or the belt withdrawing direction. The ECU 10 controls the rotation of the electric motor 14 to retract the seatbelt 6 for restraining of the occupant and housing the seatbelt 6 or to assist the withdrawal of the seatbelt 6 for wearing based on the various input signals from the sensors.

The spool 13 of the seatbelt retractor 3 comprises two members: the spool body 16 having the arc-shaped first to fourth bodies 16e, 16f, 16g, and 16h which are disposed cylindrically with circumferential intervals α, β, γ, and δ provided therebetween; and the cylindrical member 17 disposed in the spool body 16 and having a space of about the same size as the thickness of the seatbelt 6 between the outer circumferential surface of the cylindrical member 17 and the inner circumferential surfaces 16f₁ and 16h₁ of the second and fourth bodies 16f and 16h. The seatbelt 6 is sandwiched between the inner circumferential surfaces 16f₁ and 16h₁ of the second and fourth bodies 16f and 16h and the outer circumferential surface of the cylindrical member 17. The end of the seatbelt 6 is folded back, and the folded portion 6a₁ is brought into close contact with the opposing portion 6a₂ of the seatbelt 6; and the closely contact portion is stitched up to form the base end 6a. The base end 6a is in engagement with the rim 16f₂ of the second body 16f. This arrangement enables the base end 6a of the seatbelt 6 to be in tight engagement with the spool 13.

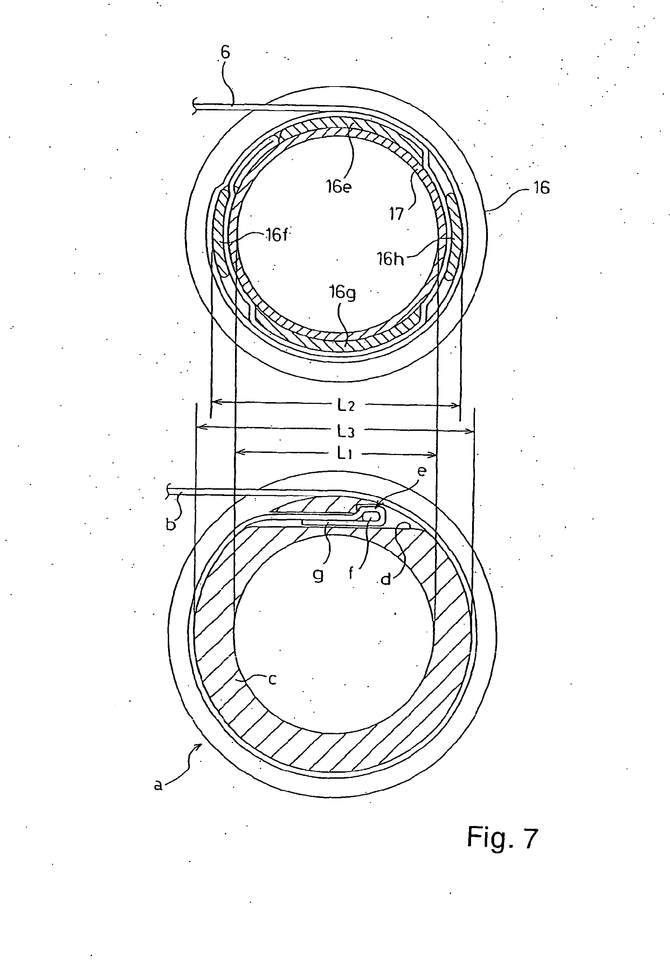

Since the base end 6a of the seatbelt 6 in engagement with the spool 13 is formed in such a manner that one end of the seatbelt 6 is simply folded back and the folded portion 6a₁ is in close contact with the opposing portion 6a₂ of the seatbelt 6, the base end 6a can be as thin as about twice the thickness of the seatbelt 6. Accordingly, the diameter of the belt retracting portion (body) of the spool 13 can be made small. More specifically, assuming that the inside diameter L₁ of the spool 13 (i.e., the inside diameter of the cylindrical member 17) in which the electric motor 14 is housed shown in Fig. 7, and the inside diameter of the known spool 13 shown in Fig. 8 are the same inside diameter L₁ (i.e., when the same electric motor 14 is used), the maximum outside diameter L₂ of the spool 13 can be set smaller than the outside diameter L₃ of the known spool 13. Thus, as the outside diameter of the spool 13 is reduced, the entire seatbelt retractor 3 can correspondingly be made compact. Particularly, for housing the electric motor 14 in the cylindrical spool 13, the seatbelt retractor 3 can be made compact more effectively.

Furthermore, the seatbelt 6 can be retained in the spool 13 only by insertion of the cylindrical member 17 into the spool body 16 with the seatbelt 6 in contact with the spool body 16. This arrangement facilitates mounting the seatbelt 6 to the spool 13, thus improving the workability.

With the seatbelt system 1 having the seatbelt retractor 3 of the embodiment, the seatbelt retractor 3 can be made compact, thereby providing high flexibility of layout in the vehicle.

Although the electric motor 14 of the embodiment is housed in the spool 13, the electric motor 14 may be disposed outside the spool 13 along the axis, like the embodiment in PCT Japanese Patent Publication No. 2003-507252, or alternatively, may be disposed outside the spool 13 in parallel to the spool 13.

The seatbelt retractor of the invention can also be applied to general seatbelt retractors 3 having no electric motor 14.

The seatbelt retractor and the seatbelt system having the same according to the invention can be applied appropriately to seatbelt retractors for use in seatbelt systems installed in vehicles such as cars, for restraining occupants with seatbelts to protect them, for retracting and withdrawing the seatbelts with spools, and to seatbelt systems having the same.

## Claims

1. A seatbelt retractor having at least a spool (13) for retracting and withdrawing a seatbelt (6), wherein:
the spool (13) comprises a spool body (16) in a cylindrical shape for retracting the seatbelt (6), and a cylindrical member (17) placed in the spool body (16);
the spool body (16) has an arc-shaped body (16f);
the diameter of the inner circumference of the body (16f) is set larger than the outside diameter of the cylindrical member (17); wherein the cylindrical member (17) is placed in the spool body (16);
a base end (6a) of the seatbelt retained in the spool is formed in such a manner that an end of the seatbelt is folded back; and
the seatbelt (6) is sandwiched between the inner circumferential surface (16f₁) of the body (16f) and the outer circumferential surface of the cylindrical member (17); and the base end (6a) of the seatbelt is in engagement with a rim (16f₂) of the body (16f),
**characterized in that**
the base end (6a) of the seatbelt is formed in such a manner that the entire folded portion (6a₁) is in close contact with the opposing portion (6a₂) of the seatbelt; and
an interval between the inner circumferential surface of the body (16f) and the outer circumferential surface of the cylindrical member (17) is set substantially the same as the thickness of the seatbelt (6), to thereby prevent the base end (6a) from entering the interval between the inner circumferential surface (16f₁) of the body (16f) and the outer circumferential surface of the cylindrical member (17).

2. The seatbelt retractor according to Claim 1,
wherein the folded portion (6a₁) at the base end (6a) of the seatbelt (6) is disposed on the side of the cylindrical member (17).

3. The seatbelt retractor according to Claim 1 or 2,
wherein a motor (14) for rotating the spool (13) is housed in the cylindrical member (17).

4. A seatbelt system comprising at least a seatbelt (6) for restraining an occupant; a seatbelt retractor (3) for withdrawably retracting the seatbelt (6); a tongue (8) slidably supported by the seatbelt (6); and a disengageable buckle (9) to be engaged with the tongue (8), wherein
the seatbelt retractor (3) is the seatbelt retractor according to any one of Claims 1 to 3.

## Patentansprüche

1. Sitzgurt-Aufroller mit wenigstens einer Spule (13) zum Zurückziehen und Entnehmen eines Sitzgurtes (6), wobei:
die Spule (13) einen Spulenkörper (16) in einer Zylinderform zum Zurückziehen des Sitzgurtes (6) und ein zylindrisches Element (17), das in dem Spulenkörper (16) platziert ist, umfasst;
der Spulenkörper (16) einen bogenförmigen Körper (16f) aufweist;
der Durchmesser des Innenumfangs des Körpers (16f) so festgelegt ist, dass er größer als der Außendurchmesser des zylindrischen Elements (17) ist; wobei das zylindrische Element (17) in dem Spulenkörper (16) platziert ist;
ein Basisende (6a) des Sitzgurtes, das in der Spule zurückgehalten wird, derart ausgebildet ist, dass ein Ende des Sitzgurtes umgefaltet ist; und
der Sitzgurt (6) zwischen der Innenumfangsfläche (16f₁) des Körpers (16f) und der Außenumfangsfläche des zylindrischen Elements (17) angeordnet ist; und das Basisende (6a) des Sitzgurtes mit einem Rand (16f₂) des Körpers (16f) gekoppelt ist,
**dadurch gekennzeichnet,**
**dass** das Basisende (6a) des Sitzgurtes derart ausgebildet ist, dass sich der gesamte gefaltete Abschnitt (6a₁) in enger Verbindung mit dem gegenüberliegenden Abschnitt (6a₂) des Sitzgurtes befindet; und
ein Abstand zwischen der Innenumfangsfläche des Körpers (16f) und der Außenumfangsfläche des zylindrischen Elements (17) so festgelegt ist, dass er im Wesentlichen gleich der Dicke des Sitzgurtes (6) ist, um dadurch zu verhindern, dass das Basisende (6a) in den Zwischenraum zwischen der Innenumfangsfläche (16f₁) des Körpers (16f) und der Außenumfangsfläche des zylindrischen Elements (17) eintritt.

2. Sitzgurt-Aufroller nach Anspruch 1, wobei der gefaltete Abschnitt (6a₁) an dem Basisende (6a) des Sitzgurtes (6) an der Seite des zylindrischen Elements (17) angeordnet ist.

3. Sitzgurt-Aufroller nach Anspruch 1 oder 2, wobei ein Motor (14) zum Drehen der Spule (13) in dem zylindrischen Element (17) untergebracht ist.

4. Sitzgurtsystem, umfassend wenigstens einen Sitzgurt (6) zum Zurückhalten eines Insassen; einen Sitzgurt-Aufroller (3) zum entnehmbaren Zurückziehen des Sitzgurtes (6); eine Zunge (8), die von dem Sitzgurt (6) verschiebbar getragen wird; und ein lösbares Gurtschloss (9), das mit der Zunge (8) in Eingriff bringbar ist, wobei
der Sitzgurt-Aufroller (3) der Sitzgurt-Aufroller nach einem der Ansprüche 1 bis 3 ist.

## Revendications

1. Enrouleur de ceinture de sécurité ayant au moins un enrouleur (13) pour rétracter et permettre le déroulement de la ceinture de sécurité (6), dans lequel:
l'enrouleur (13) comprend un corps d'enrouleur (16) selon une forme cylindrique pour rétracter la ceinture de sécurité (6), et un élément cylindrique (17) placé dans le corps d'enrouleur (16);
le corps d'enrouleur (16) a un corps en forme d'arc (16f);
le diamètre de la circonférence interne du corps (16f) est plus grand que le diamètre externe de l'élément cylindrique (17); dans lequel l'élément cylindrique (17) est placé dans le corps d'enrouleur (16);
une extrémité de base (6a) de la ceinture de sécurité retenue dans l'enrouleur est formée de sorte qu'une extrémité de la ceinture est repliée; et
la ceinture de sécurité (6) est prise en sandwich entre la surface circonférentielle interne (16f₁) du corps (16f) et la surface circonférentielle externe de l'élément cylindrique (17); et l'extrémité de base (6a) de la ceinture de sécurité est en mise en prise avec un bord (16f₂) du corps (16f),
**caractérisé en ce que**:
l'extrémité de base (6a) de la ceinture de sécurité est formée de sorte que toute la partie pliée (6a₁) est en contact immédiat avec la partie (6a₂) opposée de la ceinture de sécurité; et
un intervalle entre la surface circonférentielle interne du corps (16f) et la surface circonférentielle externe de l'élément cylindrique (17) est sensiblement le même que l'épaisseur de la ceinture de sécurité (6), pour empêcher ainsi l'extrémité de base (6a) d'entrer dans l'intervalle entre la surface circonférentielle interne (16f₁) du corps (16f) et la surface circonférentielle externe de l'élément cylindrique (17).

2. Enrouleur de ceinture de sécurité selon la revendication 1, dans lequel la partie pliée (6a₁) à l'extrémité de base (6a) de la ceinture de sécurité (6) est disposée sur le côté de l'élément cylindrique (17).

3. Enrouleur de ceinture de sécurité selon la revendication 1 ou 2, dans lequel un moteur (14) pour faire tourner l'enrouleur (13) est logé dans l'élément cylindrique (17).

4. Système de ceinture de sécurité comprenant au moins une ceinture de sécurité (6) pour retenir un occupant; un enrouleur de ceinture de sécurité (3) pour rétracter la ceinture de sécurité (6) tout en permettant son déroulement ; une languette (8) supportée de manière coulissante par la ceinture de sécurité (6); et une boucle (9) pouvant se dégager, destinée à être mise en prise avec la languette (8), dans lequel :
l'enrouleur de ceinture de sécurité (3) est l'enrouleur de ceinture de sécurité selon l'une quelconque des revendications 1 à 3.
